# EUROPEAN PATENT SPECIFICATION

(11) **EP 0 820 606 B1**
(45) Date of publication and mention of the grant of the patent: **16.06.1999**
(21) Application number: 96908963.0
(22) Date of filing: 09.04.1996
(51) Int. Cl.: G03B 35/16, G03B 35/26

(54) **METHOD AND APPARATUS FOR PRESENTING STEREOSCOPIC IMAGES**
VERFAHREN UND VORRICHTUNG ZUR VORFÜHRUNG STEREOSKOPISCHER BILDER
PROCEDE ET APPAREIL POUR PRESENTER DES IMAGES STEREOSCOPIQUES

(30) Priority: 11.04.1995 CA 2146811
(43) Date of publication of application: 28.01.1998
(73) Proprietor: IMAX CORPORATION, Toronto Ontario M4Y 1N1 (CA)
(72) Inventor: DEAN, David, M., M., Oakville, Ontario L6J 4Z3 (CA); PANABAKER, Paul, D., Oakville, Ontario L6M 2S2 (CA); BALJET, Anton, L., Oakville, Ontario L6H 1K5 (CA)
(74) Representative: Bibby, William Mark
(86) International application number: PCT/CA96/00221
(87) International publication number: WO 96/32665

(56) References cited:
- WO-A-94/14104
- US-A- 4 424 529

## Description

### FIELD OF THE INVENTION

This invention relates to stereoscopic displays in general and more particularly to stereoscopic motion picture projection.

### BACKGROUND OF THE INVENTION

Stereoscopic 3-D imaging requires the presentation of two slightly different sets of images to a viewer; one set corresponds to a left eye viewpoint and the other corresponds to a right eye viewpoint. When the sets of images are presented so that only the left eye of a viewer can see the left eye set of images and the right eye can only see the right eye set of images, the viewer will be able to perceive a 3-D image.

Several different methods of separating left and right eye images are known. In the anaglyph method, different colour filters are used. Typically, the left eye and right eye images are projected simultaneously but in different colours, say red and blue respectively, and the viewer wears a pair of glasses fitted with red and blue filters arranged to appropriately separate the images. A major disadvantage of this method is that the resulting 3-D images are deficient in colour information.

Another method of image separation involves the use of mutually extinguishing polarizing filters. The filters are placed in front of left and right eye projectors with their polarizing axes at 90 degrees to each other. Viewers wear eyeglasses with polarizing filters arranged in the same orientation as the filters on the projectors. The left and right eye images appear on the screen at the same time, but only the left eye polarized light is transmitted through the left eye lens of the eyeglasses and only the right eye polarized light is transmitted through the right eye lens. This method is inexpensive and allows full colour 3-D images. However, it has limitations in that a substantial amount of unwanted transmission can occur and can result in the formation of objectionable ghost images. For instance, the polarization characteristics of the light can be significantly altered by reflection from a screen, though metallic screen coatings will mitigate this effect. If linear polarizers (which are most effective) are used, ghost images will also increase as the viewer tilts his or her head to the left or right.

A third known method involves time multiplexing of left and right eye images. Left and right eye images are presented alternately so that there is only one eye image on the screen at any one moment in time. Viewers wear glasses which alternately block the view of one eye so that only the correct image will be seen by each eye. In other words when a left eye image is projected onto a screen the left eye lens of the glasses will be transparent and the right eye lens will be opaque. When the image on the screen changes to a right eye image, the left lens of the glasses becomes opaque and the right eye lens becomes transparent. The glasses typically have electro-optic liquid crystal shutters and are powered by batteries. This method largely overcomes the problems of unwanted transmission due to head tilt and does not require a special screen to maintain polarization.

The liquid crystal shutters that are used in time-multiplexing stereoscopic imaging are usually extinguishing shutters made of at least two linear polarizers on either side of a liquid crystal cell which contains a thin layer of liquid crystal material between two sheets of glass. The two polarizers are oriented with their axes generally orthogonal and the liquid crystal material acts as a variable polarizer influenced by an electric field. Such shutters block a significant proportion of the light when in an opaque state but they have limited transmission when they are in the transparent state, typically about 25-30% of incident light. Liquid crystal shutters have also been found to exhibit poor extinction when used to view high contrast scenes such as dark figures against a white background. Also, poor extinction is noticeable in the corner areas of "wide" screens such as those used by Imax Corporation.

When assessing the quality of 3-D motion picture images two figures of merit are used, namely maximum transmission and extinction ratio. Maximum transmission is the percentage of light generated by the projectors which actually reaches the eyes of a viewer. The extinction ratio is defined as a ratio of the brightness of a correct or wanted image to the brightness of an incorrect or unwanted image that leaks through the system. In a 3-D motion picture projection system, the extinction ratio gives an indication of how much ghosting a viewer will perceive.

It is an object of the invention to provide an improved method of stereoscopic image separation in which ghosting is reduced or eliminated.

### SUMMARY OF THE INVENTION

According to the invention there is provided a method of presenting stereoscopic images comprising the steps of:
alternately displaying corresponding left-eye and right-eye images in succession;
alternately and in synchronism with said alternate display of images, blocking the viewer's right eye when said left-eye images are displayed, and blocking the viewer's left eye when said right-eye images are displayed, using respective electro-optic liquid crystal shutters, each including a front linear polarizing filter having a first axis of polarization and a rear linear polarizing filter having a second axis of polarization at an angle different from zero with respect to said first axis;
wherein the respective liquid crystal shutters are oriented so that the said first axes of polarization of the respective front linear polarizing filters are at an angle with respect to one another;
and wherein said images are displayed by projecting the images onto a screen, and linearly polarizing the projected light so that the left-eye images are polarized along an axis that is parallel to said first axis of the electro-optic shutter for the viewer's left eye and the right-eye images are polarized along an axis parallel to the first axis of the electro-optic shutter for the viewer's right eye.

It should be noted that the term "parallel" is to be interpreted broadly in the preceding paragraph and in the claims. Thus, while exact parallelism may represent an ideal condition, acceptable results may be achieved with a deviation of a few degrees.

The invention seeks to improve the quality of presentation of stereoscopic images and reduce or eliminate "ghosting". By offsetting the axes of polarization of the front polarizers of the respective liquid crystal shutters of "alternate eye" 3-D glasses, and alternately displaying left and right eye images which are polarized to "match", so-called "cross talk" interference between the images (and resulting ghosting) is minimized. Practical limitations of currently available electro-optic shutters to mutually extinguish unwanted images inevitably results in some "leakage" of unwanted image information. The present invention seeks to eliminate that unwanted image by the use of matched polarizers as described previously. It has been found possible to dramatically improve the extinction ratio of the system while retaining high levels of maximum light transmission and acceptable background contrast.

It should be noted that the corresponding left and right eye images may overlap in time. This improves the level of maximum light transmission but at the expense of some ghosting. Thus, references herein to "alternate" display of images does not indicate that the images must be presented separately (as is the case with prior art time-multiplexing systems).

In a practical example of the invention as applied to a motion picture projection system, linear polarizer filters are placed in front of the projection lenses of a stereoscopic motion picture projector with the polarizing axes of the projector polarizers aligned so that they are parallel to the axes of the linear polarizers on the front of each liquid crystal eyeglass lens. For example, the left liquid crystal eyeglass shutter has a first linear polarizer oriented with the polarizing axis at 45° clockwise with respect to the vertical. The linear polarizer placed in front of the left eye lens of the stereoscopic motion picture projector has an identical orientation; at 45° clockwise from the vertical. Similarly, the right liquid crystal eyeglass shutter has a first linear polarizer oriented with the polarizing axis at 45° counterclockwise with respect to the vertical, and the linear polarizer placed in front of the right eye lens of the stereoscopic motion picture projector is oriented 45° counterclockwise from the vertical.

The above arrangement significantly reduces perceptible ghosting at the cost of a slight reduction in overall brightness. The loss of brightness is due to the extra linear polarizer in the optical path and is approximately 10%. Usually a loss of brightness of this magnitude is too large to contemplate, especially in a large format wide screen 3-D motion picture theatre where achieving bright pictures is typically difficult.

The invention also provides corresponding apparatus for presenting stereoscopic images, and eyeglasses as defined by claims 4 and 7, respectively.

### BRIEF DESCRIPTION OF THE DRAWINGS

The invention will be better understood with reference to the drawings which illustrate a particular preferred embodiment of the invention, as compared with the prior art.

In the drawings:
Fig. 1 is a schematic illustration of a prior art "alternate eye" 3-D motion picture projection system;
Fig. 2 is a view similar to Fig. 1 illustrating the method and apparatus of the invention; and,
Fig. 3 is a graph illustrating temporal multiplexing of the left eye and right eye images in accordance with the invention.

### DESCRIPTION OF PREFERRED EMBODIMENTS

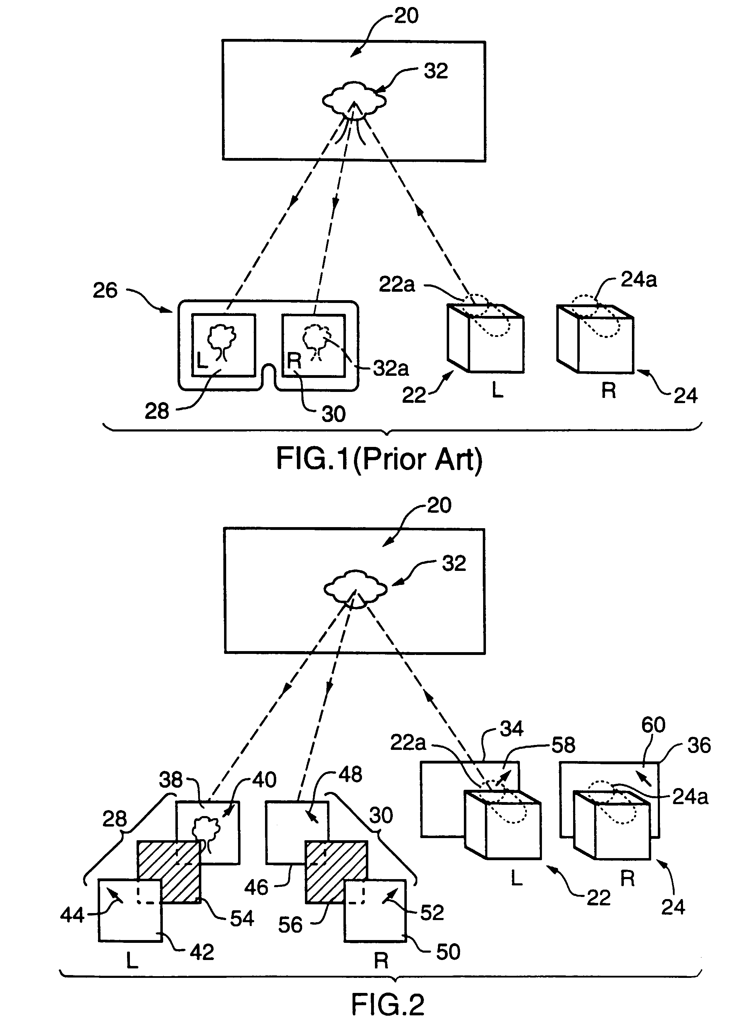

Referring first to Fig. 1, a motion picture projection screen is indicated at 20 and a pair of motion picture projectors for projecting respective series of images onto screen 20 are diagrammatically represented at 22 and 24 respectively. Two projectors have been shown although it is of course to be understood that a single stereoscopic motion picture projector can be used. An example of such a projector is disclosed in United States Patent No. 4,966,454 (Toporkiewicz). In any event, as shown in Fig. 1, two projectors are used and alternately project respective "left eye" and "right eye" images onto screen 20 through respective projection lenses 22a and 24a.

A pair of "alternate eye" 3-D glasses such as would be worn by a viewer of the images projected onto screen 20 is represented at 26 and has respective left and right lenses 28 and 30 in the form of liquid crystal shutters. The shutters are triggered alternately in synchronism with the projection of images onto screen 20 so that the right lens 30 is opaque (and the viewer's right eye blocked) when left eye images appear on the screen and, conversely, the left eye lens is opaque and the viewer's left eye is blocked when right eye images appear on the screen. Shutters of the type are well-known in the art and are disclosed for example in United States Patent No. 4,424,529 (Roese, et al.). The lenses 28 and 30 will be described in more detail later in connection with Fig. 2. For present purposes, it is sufficient to note that, while shutters of this type are reasonably efficient at blocking light, some leakage of light can occur and can result in unacceptable ghosting, particularly when the glasses are used to view high contrast scenes such as dark figures against a white background. Also, poor extinction is noticeable in the corner areas of "wide" screens such as those used by Imax Corporation.

As seen in Fig. 1, a left eye image is being projected onto screen 20 from projector 22. The left lens 28 of the eyeglasses 26 is in its transmissive state while the right lens 30 is opaque. The image 32 on screen 20 is clearly visible through the left lens 28 of the eyeglasses. However, a ghost image 32a leaks through the opaque right lens 30 of the eyeglasses, providing an objectionable perception to the viewer. The converse situation of course arises when right eye images are projected and the left lens of the eyeglasses is opaque; i.e. objectionable "ghosts" of the right eye image leak through the opaque left lens 28.

Fig. 2 shows the same components as in Fig. 1, except that linear polarizing filters 34 and 36 have been placed in front of the respective projection lenses of projectors 22 and 24. Also in Fig. 2, the two lenses 28 and 30 of the eyeglasses 26 have been shown in more detail.

Referring to lens 26 by way of example, the lens includes a front polarizing filter 38 having an axis of polarization indicated at 40, and a rear polarizing filter 42 having an axis of polarization 44 at an angle (e.g. 90°) with respect to the axis 40 of the front polarizing filter. Similarly, lens 28 has a front polarizing filter 46 with an axis of polarization 48 and a rear polarizing filter 50 with an axis of polarization 52 at an angle to axis 48. Located between the two polarizers in each lens is a cell comprising a thin layer of liquid crystal material between two sheets of glass. The two cells are indicated at 54 and 56 respectively. As is well known in the art, the liquid crystal material acts as a variable polarizer influenced by an electric field. Thus, in the transmissive state, the liquid crystal material in effect "twists" the light as it travels between the front and rear polarizers, so that the light is transmitted through the lens. In the "off" state, this twisting effect does not occur and light is not transmitted since the axes of polarization of the two polarizers are not in line.

In accordance with the invention, the front linear polarizing filters 38 and 40 of the respective eyeglass lenses are deliberately arranged with their axes of polarization (40 and 48 respectively) at an angle with respect to one another, preferably 90° (orthogonal).

The two polarizing lenses 34 and 36 that are placed in front of the lenses of the respective projectors 22 and 24 are "matched" to the front polarizing filters 38 and 40 of the respective left and right lenses of the eyeglasses. In other words, the filter 34 that is front of the projector 22 (the left eye image projector) is arranged with its axis of polarization (denoted 58) parallel to the axis of polarization 40 of the front polarizer 38 of the left eyeglass lens 28. Similarly, the filter 36 that is placed in front of the right eye image projector 24 is arranged with its axis of polarization (60) parallel to the axis of polarization 48 of the front polarizer 46 of the right eye lens 30. At the instant shown in Fig. 2, a left eye image is being projected onto screen 20 and is polarized, say, 45° clockwise from the vertical as indicated by axis 58 of filter 34. In contrast with the situation in Fig. 1 in which this image light is not polarized, there can be no leakage through the right eye lens 30 of the eyeglasses 26. In the embodiment of Fig. 2, any of this left eye image light that strikes the right lens 30 will first encounter the front polarizer 46 which is orthogonally polarized (at 45° counterclockwise from the vertical) so that there will be no leakage of left eye image light into the right eye lens. The converse situation will of course obtain when right eye images are projected and the left eyeglass lens 28 is in the opaque state.

This arrangement significantly reduces perceptible ghosting at the cost of a slight reduction in overall brightness. The loss of brightness is due to the extra linear polarizer in the optical path as compared with the embodiment of Fig. 1 and will typically amount to about 10%. Usually, a loss of brightness of this magnitude is too large to contemplate, especially in a large format wide screen 3-D motion picture theatre where achieving bright pictures typically is difficult. However, it has been found in practice that this loss of brightness is acceptable and does not represent a practical obstacle.

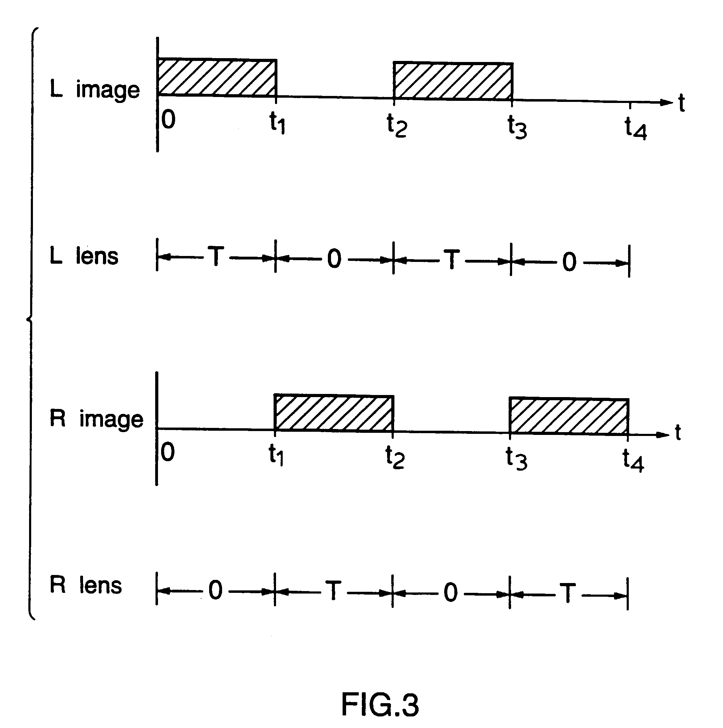

For the sake of clarification, Fig. 3 illustrates the alternate projection of left and right eye images of the inventive method. Left and right eye images are alternately displayed and the glasses are oppositely triggered with the same temporal frequency. The left and right eye images are alternately displayed in a repeating on/off cycle in which the "on" and "off" portions of the cycle are of equal length (a "50/50" duty cycle), so that there are never left and right eye images on the screen at the same time (although this is not essential). When a left image is projected, the left lens of a pair of 3-D eyeglasses is transparent (time period T), whereas the right eye lens is opaque (time period O). Likewise, when a right eye image is projected the left lens is opaque.

Alternate projection of left and right eye images can be achieved, for example, by projecting the images from two separate filmstrips using two projectors that are synchronized with one another. Alternatively, a single rolling loop projector capable of so-called "alternate image" projection from two separate filmstrips can be used. In either case, provision must be made for the images to be differently polarized.

The electro-optic shutters incorporated in the eyeglasses worn by the viewer must be activated in synchronism with projection of the images. This can be accomplished in a variety of ways, for example by suitable electrical circuitry for triggering the shutters in synchronization with the projector or projectors. United States Patent No. 5,002,387 (Baljet et al.) discloses a projection synchronization system in which infrared signals are used to synchronize prior art blocking shutters in a time multiplexing stereoscopic system.

The following discussion will further illustrate the advantages of the invention, as compared with the prior art:

Figures of merit for the inventive method can be calculated for comparison by including the effects of adding aligned polarizers to the projection lenses. The table below illustrates the advantages of the invention. The first column contains the three image quality figures of merit for the prior art method of 3-D motion picture projection using linear polarizers in front of the projection lenses and in eyeglasses worn by members of the audience. The second column contains the two figures of merit for the inventive 3-D method. The extinction ratio of the inventive shutters is increased dramatically (over 10,000%). The maximum transmission when using the inventive method is only marginally decreased. Overall the quality of a 3-D presentation is greatly improved when using the inventive method.

| **Figure of Merit Table** | | |
|---|---|---|
| | **LC Shutter** | **Invention** |
| Transmission | 30% | 30 x .9 = 27% |
| | | |
| Extinction Ratio (on axis) | 150:1 | 15,000:1 |
| | | |
| Extinction Ratio (off axis) | 10:1 | 1,000:1 |

The invention addresses several limitations and disadvantages of prior art systems. It provides a 3-D image separation method that has a high extinction ratio especially in scenes of high contrast and is not susceptible to ghosting caused by head tilting.

The above description should not be construed as limiting the scope of the invention but as merely providing illustrations of some of the preferred embodiments of this invention. For example although polarizing filters are described, other optically extinguishing filters such as colour or wavelength band pass filters could be used.

## Claims

1. A method of presenting stereoscopic images which comprises the steps of:
alternately displaying corresponding left-eye and right-eye images in succession;
alternately and in synchronism with said alternate display of images, blocking the viewer's right eye when said left-eye images are displayed, and blocking the viewer's left eye when said right-eye images are displayed, using respective electro-optic liquid crystal shutters, each including a front linear polarizing filter having a first axis of polarization and a rear linear polarizing filter having a second axis of polarization at an angle with respect to said first axis;
wherein the respective liquid crystal shutters are oriented so that the said first axes of polarization of the respective front linear polarizing filters are at an angle different from zero with respect to one another;
and wherein said images are displayed by projecting the images onto a screen, and linearly polarizing the projected light so that the left-eye images are polarized along an axis that is parallel to said first axis of the electro-optic shutter for the viewer's left eye and the right-eye images are polarized along an axis parallel to the first axis of the electro-optic shutter for the viewer's right eye.

2. A method as claimed in claim 1, wherein the respective liquid crystal shutters are oriented so that said first axes of polarization of the respective front linear polarizing filters are orthogonal with respect to one another, whereby the projected left eye and right eye images are also polarized along axes that are orthogonal to one another.

3. A method as claimed in claim 1, wherein said left eye and right eye images are projected through separate projection lenses, and are linearly polarized by providing respective polarizing filters in front of said lenses.

4. An apparatus for presenting stereoscopic images which comprises:
means for alternately displaying corresponding left eye and right eye images in succession;
means for alternately and in synchronism with said alternate display of images, blocking the viewer's right eye when said left eye images are displayed and blocking the viewer's left eye when said right eye images are displayed, said means comprising respective electro-optic liquid crystal shutters, each including a front linear polarizing filter having a first axis of polarization and a rear linear polarizing filter having a second axis of polarization at an angle with respect to said first axis, wherein the said liquid crystal shutters are oriented so that the said first axes of polarization of the respective front linear polarizing filters are at an angle different from zero with respect to one another;
and wherein said means for alternately displaying corresponding left eye and right eye images in succession comprises means for projecting the images onto a screen, and means for linearly polarizing the projected light so that the left eye images are polarized along an axis that is parallel to said first axis of the electro-optic shutter for the viewer's left eye and the right eye images are polarized along an axis parallel to the first axis of the electro-optic shutter for the viewer's right eye.

5. An apparatus as claimed in claim 4, wherein the respective liquid crystal shutters are oriented so that said first axes of polarization of the respective front linear polarizing filters are orthogonal with respect to one another, whereby the projected left eye and right eye images are also polarized along axes that are orthogonal to one another.

6. An apparatus as claimed in claim 4, wherein said left eye and right eye images are projected through separate projection lenses, and are linearly polarized by providing respective polarizing filters in front of said lenses.

7. Eyeglasses for viewing stereoscopic images comprising corresponding left eye and right eye images displayed in succession, the eyeglasses having respective left eye and right eye lenses each comprising an electro-optic liquid crystal shutter including a front linear polarizing filter having a first axis for polarization and a rear linear polarizing filter having a second axis of polarization at an angle with respect to said first axis, wherein the respective liquid crystal shutters are oriented so that the first axes of polarization of the respective front linear polarizing filters are at an angle different from zero with respect to one another.

## Patentansprüche

1. Verfahren zur Darstellung stereoskopischer Bilder mit folgenden Schritten:
abwechselnde, aufeinanderfolgende Darstellung entsprechender Bilder für das linke Auge und das rechte Auge;
abwechselndes, synchron zu der abwechselnden Darstellung der Bilder, Blockieren des rechten Auges des Betrachters, wenn die Bilder für das linke Auge dargestellt werden, und Blockieren des linken Auges des Betrachters, wenn die Bilder für das rechte Auge dargestellt werden, unter Verwendung jeweiliger elektrooptischer Flüssigkristallverschlüsse, die jeweils ein vorderes lineares Polarisationsfilter aufweisen, das eine erste Polarisationsachse aufweist, sowie ein hinteres lineares Polarisationsfilter, welches eine zweite Polarisationsachse in einem Winkel zur ersten Achse aufweist;
wobei die jeweiligen Flüssigkristallverschlüsse so orientiert sind, daß die ersten Polarisationsachsen der jeweiligen vorderen linearen Polarisationsfilter in einem von Null verschiedenen Winkel zueinander angeordnet sind;
und wobei die Bilder so dargestellt werden, daß die Bilder auf eine Leinwand projiziert werden, und das projizierte Licht linear polarisiert wird, so daß die Bilder für das linke Auge entlang einer Achse polarisiert sind, die parallel zu der ersten Achse des elektrooptischen Verschlusses für das linke Auge des Betrachters verläuft, und die Bilder für das rechte Auge entlang einer Achse parallel zur ersten Achse des elektrooptischen Verschlusses für das rechte Auge des Betrachters polarisiert sind.

2. Verfahren nach Anspruch 1,
bei welchem die jeweiligen Flüssigkristallverschlüsse so orientiert sind, daß die ersten Polarisationsachsen der jeweiligen vorderen linearen Polarisationsfilter orthogonal zueinander verlaufen, wodurch die projizierten Bilder für das linke Auge und das rechte Auge ebenfalls entlang zueinander orthogonalen Achsen polarisiert sind.

3. Verfahren nach Anspruch 1,
bei welchem die Bilder für das linke Auge und das rechte Auge durch getrennte Projektionslinsen projiziert werden, und dadurch linear polarisiert werden, daß jeweilige Polarisationsfilter vor den Linsen vorgesehen werden.

4. Einrichtung zur Darstellung stereoskopischer Bilder, welche aufweist:
eine Vorrichtung zur abwechselnden Darstellung entsprechender Bilder für das linke Auge und das rechte Auge aufeinanderfolgend;
eine Vorrichtung zum abwechselnden, synchron zu der abwechselnden Darstellung der Bilder, Blockieren des rechten Auges des Betrachters, wenn die Bilder für das linke Auge dargestellt werden, und zum Blockieren des linken Auges des Betrachters, wenn die Bilder für das rechte Auge dargestellt werden, wobei die Vorrichtung jeweilige elektrooptische Flüssigkristallverschlüsse aufweist, die jeweils ein vorderes lineares Polarisationsfilter enthalten, das eine erste Polarisationsachse aufweist, sowie ein hinteres lineares Polarisationsfilter, welches eine zweite Polarisationsachse in einem Winkel zur ersten Achse aufweist, wobei die Flüssigkristallverschlüsse so orientiert sind, daß die ersten Polarisationsachsen der jeweiligen vorderen linearen Polarisationsfilter in einem von Null verschiedenen Winkel zueinander stehen;
und wobei die Vorrichtung zur abwechselnden Darstellung entsprechender Bilder für das linke Auge und das rechte Auge aufeinanderfolgend eine Vorrichtung zum Projizieren der Bilder auf eine Leinwand aufweist, und eine Vorrichtung zum linearen Polarisieren des projizierten Lichtes, so daß die Bilder für das linke Auge entlang einer Achse polarisiert werden, die parallel zur ersten Achse des elektrooptischen Verschlusses für das linke Auge des Betrachters verläuft, und die Bilder für das rechte Auge entlang einer Achse parallel zur ersten Achse des elektrooptischen Verschlusses für das rechte Auge des Betrachters polarisiert werden.

5. Einrichtung nach Anspruch 4,
bei welcher die jeweiligen Flüssigkristallverschlüsse so orientiert sind, daß die ersten Polarisationsachsen der jeweiligen vorderen linearen Polarisationsfilter orthogonal zueinander angeordnet sind, wodurch die projizierten Bilder für das linke Auge und das rechte Auge ebenfalls entlang zueinander orthogonalen Achsen polarisiert werden.

6. Einrichtung nach Anspruch 4,
bei welcher die Bilder für das linke Auge und das rechte Auge durch getrennte Projektionslinsen projiziert werden, und dadurch linear polarisiert werden, daß jeweilige Polarisationsfilter vor den Linsen vorgesehen werden.

7. Brillen zur Betrachtung stereoskopischer Bilder, welche entsprechende Bilder für das linke Auge und das rechte Auge umfassen, die hintereinander dargestellt werden, wobei die Brillen jeweilige Linsen für das linke Auge und das rechte Auge aufweisen, die jeweils einen elektrooptischen Flüssigkristallverschluß enthalten, der ein vorderes lineares Polarisationsfilter aufweist, das eine erste Polarisationsachse aufweist, und ein hinteres lineares Polarisationsfilter, welches eine zweite Polarisationsachse in einem Winkel zur ersten Achse aufweist, wobei die jeweiligen Flüssigkristallverschlüsse so orientiert sind, daß die ersten Polarisationsachsen der jeweiligen vorderen linearen Polarisationsfilter in einem von Null verschiedenen Winkel zueinander stehen.

## Revendications

1. Procédé de présentation d'images stéréoscopiques qui comprend les étapes consistant à :
afficher en alternance des images correspondant à l'oeil gauche et à l'oeil droit successivement ;
en alternance et en synchronisme avec ledit affichage alterné d'images, cacher l'oeil droit de l'observateur lorsque lesdites images pour l'oeil gauche sont affichées, et cacher l'oeil gauche de l'observateur lorsque lesdites images pour l'oeil droit sont affichées, en utilisant des obturateurs à cristaux liquides électro-optiques respectifs, chacun comprenant un filtre polarisant linéaire avant présentant un premier axe de polarisation et un filtre polarisant linéaire arrière présentant un second axe de polarisation formant un angle par rapport audit premier axe ;
dans lequel les obturateurs à cristaux liquides respectifs sont orientés de manière à ce que lesdits premiers axes de polarisation des filtres polarisants linéaire avant respectifs forment un angle différent de zéro l'un par rapport à l'autre ;
et dans lequel lesdites images sont affichées en projetant les images sur un écran, et en polarisant linéairement la lumière projetée de sorte que les images pour l'oeil gauche soient polarisées suivant un axe qui est parallèle audit premier axe de l'obturateur électro-optique destiné à l'oeil gauche de l'observateur et que les images pour l'oeil droit soient polarisées suivant un axe parallèle au premier axe de l'obturateur électro-optique destiné à l'oeil droit de l'observateur.

2. Procédé selon la revendication 1, dans lequel les obturateurs à cristaux liquides respectifs sont orientés de sorte que lesdits premiers axes de polarisation des filtres polarisants linéaire avant respectifs soient orthogonaux l'un par rapport à l'autre, grâce à quoi les images projetées pour l'oeil gauche et pour l'oeil droit sont également polarisées selon des axes qui sont orthogonaux l'un par rapport à l'autre.

3. Procédé selon la revendication 1, dans lequel lesdites images pour l'oeil gauche et pour l'oeil droit sont projetées par l'intermédiaire d'objectifs de projection séparées, et sont polarisées linéairement en disposant des filtres polarisants respectifs à l'avant desdits objectifs.

4. Dispositif destiné à présenter des images stéréoscopiques lequel comprend :
un moyen destiné à afficher en alternance des images pour l'oeil gauche et pour l'oeil droit successivement ;
un moyen destiné, en alternance et en synchronisme avec ledit affichage alterné d'images, à cacher l'oeil droit de l'observateur lorsque lesdites images pour l'oeil gauche sont affichées et cacher l'oeil gauche de l'observateur lorsque lesdites images pour l'oeil droit sont affichées, ledit moyen comprenant des obturateurs à cristaux liquides électro-optiques respectifs, chacun comprenant un filtre polarisant linéaire avant présentant un premier axe de polarisation et un filtre polarisant linéaire arrière présentant un second axe de polarisation formant un angle par rapport audit premier axe, dans lequel lesdits obturateurs à cristaux liquides sont orientés de sorte que lesdits premiers axes de polarisation des filtres polarisants linéaire avant respectifs forment un angle différent de zéro l'un par rapport à l'autre ;
et dans lequel ledit moyen destiné à afficher en alternance des images correspondant à l'oeil gauche et à l'oeil droit successivement, comprend un moyen destiné à projeter lesdites images sur un écran, et un moyen destiné à polariser linéairement la lumière projetée de sorte que les images pour l'oeil gauche soient polarisées suivant un axe qui est parallèle audit premier axe de l'obturateur électro-optique destiné à l'oeil gauche de l'observateur et que les images pour l'oeil droit soient polarisées suivant un axe parallèle au premier axe de l'obturateur électro-optique destiné à l'oeil droit de l'observateur.

5. Dispositif selon la revendication 4, dans lequel les obturateurs à cristaux liquides respectifs sont orientés de sorte que lesdits premiers axes de polarisation des filtres polarisants linéaire avant respectifs soient orthogonaux l'un par rapport à l'autre, grâce à quoi les images pour l'oeil gauche et l'oeil droit projetées sont également polarisées selon des axes qui sont orthogonaux l'un par rapport à l'autre.

6. Dispositif selon la revendication 4, dans lequel lesdites images pour l'oeil gauche et pour l'oeil droit sont projetées par l'intermédiaire d'objectifs de projection séparées, et sont polarisées linéairement en disposant des filtres polarisants respectifs à l'avant desdits objectifs.

7. Lunettes destinées à observer des images stéréoscopiques comprenant des images correspondant à l'oeil gauche et à l'oeil droit affichées successivement, les lunettes comportant des "verres" pour l'oeil gauche et pour l'oeil droit respectives comprenant chacun un obturateur à cristaux liquides électro-optique comprenant un filtre polarisant linéaire avant présentant un premier axe de polarisation, et un filtre polarisant linéaire arrière présentant un second axe de polarisation formant un angle par rapport audit premier axe, dans lesquelles les obturateurs à cristaux liquides respectifs sont orientés de sorte que les premiers axes de polarisation des filtres polarisants linéaire avant respectifs forment un angle différent de zéro l'un par rapport à l'autre.
